# EUROPEAN PATENT SPECIFICATION

(11) **EP 3 644 474 B1**
(45) Date of publication and mention of the grant of the patent: **22.09.2021**
(21) Application number: 19190446.5
(22) Date of filing: 07.08.2019
(51) Int. Cl.: B62B 3/14, H02J 7/00, H02J 50/40

(54) **POWER TRANSMISSION DEVICE AND POWER SUPPLY SYSTEM**
ENERGIEÜBERTRAGUNGSVORRICHTUNG UND ENERGIEVERSORGUNGSSYSTEM
DISPOSITIF DE TRANSMISSION DE PUISSANCE ET SYSTÈME D'ALIMENTATION ÉLECTRIQUE

(30) Priority: 22.10.2018 JP 2018198589
(43) Date of publication of application: 29.04.2020
(73) Proprietor: Toshiba Tec Kabushiki Kaisha, 141-8562 Tokyo (JP)
(72) Inventor: KATO, Masakazu, Shinagawa-ku, Tokyo 141-8562 (JP); OGISHIMA, Takuya, Shinagawa-ku, Tokyo 141-8562 (JP)
(74) Representative: Bandpay & Greuter

(56) References cited:
- EP-A2- 2 273 444
- JP-A- 2006 101 577
- JP-A- 2017 131 008
- KR-A- 20180 029 795

## Description

### FIELD

Embodiments described herein relate generally to a power transmission device and a power supply system.

### BACKGROUND

Typically, a power supply system charges a battery or the like using a technology, such as non-contact power transfer, that transfers electric power in a non-contact manner. Such a power supply system may be applied to a system that charges a battery loaded in a movable object, such as a cart or a vehicle. For example, some systems transfer the electric power from a power transmission coil mounted on a floor or the ground to a power reception coil mounted on a bottom of a movable object in which a battery is loaded. However, if the power transmission coil is mounted upwards with respect to the power reception coil mounted on the bottom of the movable object, foreign objects can be inserted between the power transmission coil and the power reception coil. If the power transmission is performed when the foreign object is a conductor, the foreign object may generate heat, which may even cause ignition in some cases.

JP 2006 101577 A discloses a wireless power transmission system comprising a cart with wheel and rails for guiding the wheels of the cart.

### SUMMARY OF INVENTION

Aspects of the invention are disclosed in independent system claim 1. To solve such problem, there is provided a power transmission system for transmitting electric power to a cart, the system comprising:
a first power transmission antenna configured to be disposed along a side of the cart so as to face a power reception antenna arranged in a side surface of the cart, the first power transmission antenna configured to transmit electric power towards the side surface of the cart; and
a power transmission circuit configured to cause the first power transmission antenna to transmit the electric power to the power reception antenna.

The power transmission device further comprises a pair of guide rails configured to receive a wheel of the cart;
wherein the power transmission antenna is disposed along one of the guide rails.

And each of the guide rails comprises a plurality of recesses, each of the recesses configured to receive the wheel such that cart is stopped at a position relative to the guide rails.

Preferably yet, each of the plurality of recesses is defined by a depth, the depth being 1% to 3%, inclusive, of a diameter of the wheel.

Suitably, the power transmission system further comprises a second power transmission antenna disposed along the side of the cart;
wherein the power transmission circuit is configured to determine a first distance between the power reception antenna and the first power transmission antenna, determine a second distance between the power reception antenna and the second power transmission antenna, and cause the first power transmission antenna to transmit the electric power to the power reception antenna in response to determining that the first distance is less than the second distance.

Suitably still, the first power transmission antenna is disposed above a ground surface along which the cart is resting.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective view illustrating a configuration of a shopping cart loaded with a battery charged by a power supply system according to an embodiment;
Fig. 2 is a perspective view illustrating a state in which the shopping cart loaded with the battery charged by the power supply system is stored at a storage position according to the embodiment;
Fig. 3 is a block diagram illustrating a configuration of a control system of the power supply system according to the embodiment;
Fig. 4 is a diagram illustrating an example of arrangement of a power transmission device in the power supply system according to the embodiment;
Fig. 5 is a diagram illustrating a modification of the power transmission device in the power supply system according to the embodiment;
Fig. 6 is a diagram illustrating a positional relationship between the power transmission device in the power supply system and a recess arranged along a guide rail according to the embodiment;
Fig. 7 is a diagram illustrating a positional relationship between the power transmission device in the power supply system and a plurality of carts stored at the storage position according to the embodiment;
Fig. 8 is a diagram illustrating a first example of a configuration of the recess arranged at a position corresponding to a position of the power transmission device in the power supply system according to the embodiment;
Fig. 9 is a diagram illustrating a second example of the configuration of the recess arranged at the position corresponding to the position of the power transmission device in the power supply system according to the embodiment; and
Fig. 10 is a diagram illustrating experimental results of subjective evaluation on a depth (step) of the recess arranged at the position corresponding to the position of the power transmission device in the power supply system according to the embodiment.

### DETAILED DESCRIPTION

In accordance with an embodiment, a power transmission device comprises a power transmission antenna arranged on a side of a cart stored at a storage position to face a power reception antenna arranged in a side surface of the cart so as to transmit electric power towards the side surface of the cart stored at the storage position; and a power transmission circuit configured to transmit electric power to be received by the power reception antenna arranged in the side surface of the cart from the power transmission antenna.

Hereinafter, a power supply system according to each embodiment is described with reference to the accompanying drawings.

### (First Embodiment)

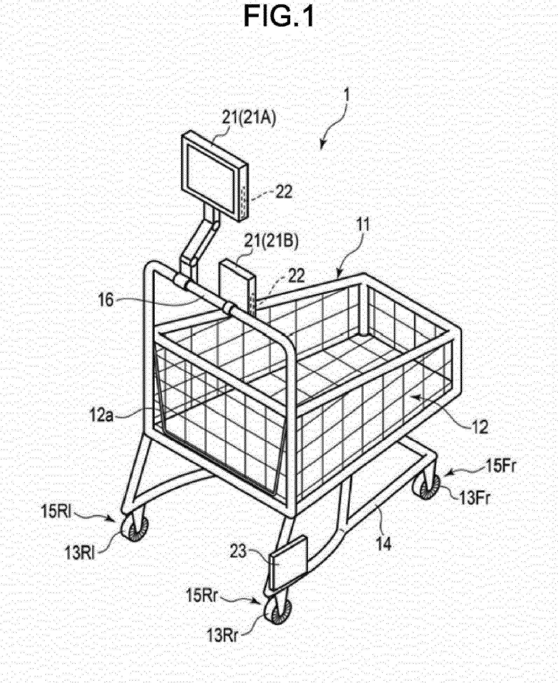

Fig. 1 is a diagram illustrating a configuration of a shopping cart 1 loaded with a battery to be charged by a power supply system according to the embodiment.

The shopping cart (hereinafter, simply referred to as a cart) 1 is an example of a movable object loaded with a battery charged by the power supply system. The power supply system includes a system (e.g., power transmission system, etc.) on a power transmission side for transmitting electric power in a non-contact manner and a system (e.g., power reception system, etc.) on a power reception side for receiving the electric power transmitted in the non-contact manner.

The power reception system is a power reception device loaded in the cart 1 to receive the electric power transmitted in a non-contact manner. For example, the power reception system charges a battery loaded in the cart 1 with the electric power received in the non-contact manner. The power transmission system is a power transmission device for transmitting the electric power that can be received by the power reception system loaded in the cart 1. For example, the power transmission system transmits the electric power in the non-contact manner to the power reception system loaded in the cart 1 stored at a storage position (e.g., cart storage area, etc.).

The battery charged by the power supply system loaded in the cart 1 is, for example, a power supply device that supplies electric power to an electronic device loaded in the cart 1. The battery charged by the power supply system may be included in the electronic device loaded in the cart 1. The battery charged by the power supply system may be loaded in the cart 1 as a device separate from the electronic device to supply the electric power to the electronic device.

In the configuration shown in Fig. 1, the cart 1 is formed by attaching an electronic device 21 provided with a battery 22 and a power reception device 23 to a movable cart main body 11 in which commodities are stored. The cart main body 11 is movable by an operation by a user while storing commodities. The electronic device 21 provides information or services to the user. The battery 22 is a power supply device for operating the electronic device 21. The power reception device 23 receives the electric power transmitted from an external device. The electronic device 21 charges the battery 22 with the electric power that the power reception device 23 receives.

The battery 22 may be a power supply device (external power supply) arranged separately from the electronic device 21. The battery 22 may serve as the external power supply and includes a secondary battery for storing the electric power and a charging circuit for charging the secondary battery with the electric power from the power reception device 23. In this case, the battery 22 needs to supply the electric power stored in the secondary battery to the electronic device 21.

The cart main body 11 has a storing basket 12 for storing a commodity. The storing basket 12 is supported by a frame 14 provided with four casters 15 (15Fr, 15F1, 15Rr, 15R1). The four casters 15 are arranged at lower four corners of the frame 14. Each caster 15 (15Fr, 15Fl, 15Rr, 15Rl) has a wheel 13 (13Fr, 13F1, 13Rr, 13R1) rotating in a moving direction. The cart main body 11 moves as the wheels 13 of the casters 15 rotate on the floor. In each caster 15, the wheel 13 rotates in such a manner that a rotation direction thereof is freely changed. Thereby, a moving direction of the cart main body 11 can be freely changed.

A handle 16 is arranged on one surface side of the storing basket 12 in the frame 14. The handle 16 may be gripped by the user. For example, the user may grip the handle 16 to move the cart main body 11. In the present embodiment, a direction in which the storing basket 12 is pushed from the handle 16 that the user grips is set as a forward direction. With reference to the forward direction, the wheel 13Fr supported by the caster 15Fr is a right front wheel, and the wheel 13F1 supported by the caster 15F1 is a left front wheel. The wheel 13Rr supported by the caster 15Rr is a right rear wheel, and the wheel 13R1 supported by the caster 15R1 is a left rear wheel.

A lower part of the frame 14 at which the four casters 15 are arranged at the four corners is formed in such a manner that a front side thereof is narrow and a rear side thereof is wide in the forward direction. For this reason, a width in a left-right direction between the casters 15Fr and 15F1 supporting the front wheels is smaller than that between the casters 15Rr and 15R1 supporting the rear wheels. In this way, when a plurality of carts is stored in tandem, a rear cart frame is stored so as to overlap along a front cart frame. In the embodiment, the handle 16 side is referred to as a front side with respect to the storing basket 12, and an opposite side thereof is referred to as a tip side. A surface on the front side of the storing basket 12 forms an opening/closing surface 12a capable of being opened and closed with a lower end as a free end. The storing basket 12 is formed in such a manner that a surface on the tip side thereof is smaller than the surface on the front side serving as the opening/closing surface 12a. In this way, if a plurality of carts is stored in a state of being linked in tandem, the rear cart is stored in such a manner that the opening/closing surface 12a of the front cart is pushed up and the storing baskets 12 of the front and rear carts overlap with each other.

The electronic device 21 is attached to the cart main body 11. In the configuration shown in Fig. 1, the electronic device 21 includes the battery 22, and is attached to the handle 16 of the storing basket 12. The electronic device 21 is driven by the electric power from the battery 22. For example, the electronic device 21 is an information terminal such as a tablet terminal for providing information to the user, or a commodity reader for acquiring information of a commodity selected by the user. The electronic device 21 may be a charging device for charging an electronic device such as a portable terminal (e.g., a mobile phone, a smartphone, a digital camera, etc.) possessed by the user with the electric power from the battery 22.

In the configuration shown in Fig. 1, as the electronic device 21, a tablet terminal 21A and a commodity reader 21B are shown. The tablet terminal 21A is a computer having a display section provided with a touch panel. The tablet terminal 21A is attached with the display section thereof facing the user present on the handle 16 side. For example, the tablet terminal 21A displays information of a commodity read through a commodity reader. The tablet terminal 21A may perform a settlement processing on the commodity read through the commodity reader.

The commodity reader 21B serving as the electronic device 21 reads information of the commodity. The commodity reader 21B may have a display section for displaying the read information from the commodity. For example, the commodity reader 21B is a radio frequency identification (RFID) tag reader that reads an RFID tag or the like attached to a commodity to be put in and taken out of the storage basket 12. The commodity reader 21B may be a scanner that reads commodity identification information such as a barcode attached to the commodity.

Instead of the tablet terminal 21A, the electronic device 21 may be an interface device for connecting a portable terminal (such as a smartphone or a tablet terminal) carried by the user. The portable terminal connected to the interface device serving as the electronic device 21 may perform the same processing as the tablet terminal 21A described above. The interface device serving as the electronic device 21 may charge a battery included in the portable terminal. The interface device serving as the electronic device 21 may have the battery 22 therein or may be connected to the battery 22 separately arranged.

The power reception device 23 is attached to a side surface of the cart main body 11. The power reception device 23 receives the electric power transmitted in a non-contact manner and supplies the received electric power to the electronic device 21 or the battery 22. The power reception device 23 includes a power reception antenna and a circuit. The power reception device 23 is attached to the side surface of the cart main body 11 in such a manner that a power reception surface of the power reception antenna for receiving the electric power (i.e., a surface facing an antenna on the power transmission side) is substantially perpendicular to the floor. The configuration of the control system of the power reception device 23 is described in detail below.

The power reception device 23 is attached to the side surface of the cart main body 11 to receive the electric power transmitted from a side of the cart main body 11. In the configuration shown in Fig. 1, the power reception device 23 is arranged above the caster 15Rr that supports the rear wheel 13Rr to face the outside of the cart main body 11 in a state in which the power reception surface of the power reception antenna thereof is substantially perpendicular to the floor. According to the configuration shown in Fig. 1, the power reception device 23 can receive the electric power output from a power transmission antenna arranged on the right side of the cart main body 11. The power reception device 23 needs to be arranged on the side surface of the cart main body 11 in a state in which the power reception surface of the power reception antenna is substantially perpendicular to the floor. The position where the power reception device 23 is arranged may be designed according to an arrangement of a power transmission device 32 including the power transmission antenna arranged to face the power reception antenna.

Next, a configuration of the power supply system for charging the battery 22 loaded in the cart 1 configured as described above is described.

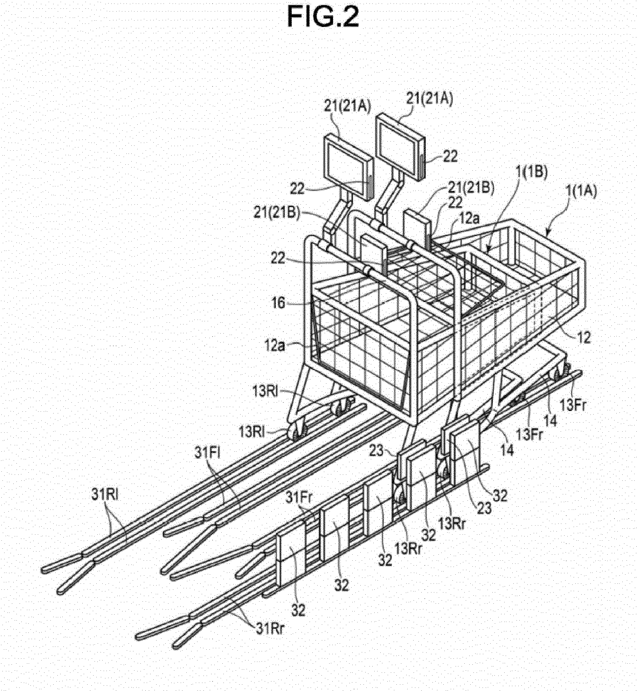

Fig. 2 is a perspective view illustrating a state in which the plurality of carts 1 each loaded with the battery 22 charged by the power supply system is stored at the storage position according to the embodiment.

Each cart 1 loaded with the battery 22 is stored at a predetermined storage position (cart storage area) as shown in Fig. 2. A state in which two carts 1 (1A and 1B) are stored at the storage position is shown in Fig. 2; however, the plurality of carts 1 is stored in tandem at the storage position.

At the storage position, four guide rails 31 (31Rr, 31Rl, 31Fr and 31Fl) are arranged to guide the wheels 13 supported by the four casters 15 of each stored cart 1. The guide rails 31 guide each cart 1 to a predetermined position at the storage position. In the example shown in Fig. 2, a pair of guide rails 31Rr and 31R1 for the use of the rear wheels of the cart 1 and a pair of guide rails 31Fr and 31F1 for the use of the front wheels of the cart 1 are arranged. However, the guide rail 31 is not limited to having a configuration in which four guide rails are arranged, and may have any configuration as long as it can guide each cart 1 to the predetermined position at the storage position. For example, any one or two of the four guide rails 31Rr, 31R1, 31Fr and 31F1 may be omitted for the guide rails 31.

At the storage position, the wheels of each cart 1 move along the guide rails 31, and the carts 1 are stored in such a manner that the front and rear carts overlap with each other. The surface on front side of the storing basket 12 of the cart 1 is the opening/closing surface 12a capable of being opened and closed with a lower end thereof as the free end. The storing basket 12 is formed in such a manner that the surface on the tip side is smaller than the surface on the front side serving as the opening/closing surface 12a. In this way, if the tip side of the storing basket 12 of a rear cart 1B is pushed into the opening/closing surface 12a of a front cart 1A, the opening/closing surface 12a of the front cart 1A is pushed upward. If the rear cart 1B is further pushed while the opening/closing surface 12a of the front cart 1A is pushed upward, the storing basket 12 of the cart 1B is stored so as to overlap with the storing basket 12 of the cart 1A.

The frame 14 of each cart 1 is formed in such a manner that a tip side thereof is narrow and a front side thereof is wide in a left-right direction with respect to a moving direction along the guide rails 31. For this reason, a width in the left-right direction between the casters 15Fr and 15F1 supporting the front wheels 13Fr and 13F1 of the cart 1 is smaller than that between the casters 15Rr and 15R1 supporting the rear wheels 13Rr and 13R1. In this way, when a plurality of carts is stored in a state of being linked in tandem, the frame 14 of the rear cart 1B is stored so as to overlap along the frame 14 of the front cart 1A.

As described above, the plurality of carts 1 (1A and 1B) is stored at the storage position in a state in which the front and rear carts overlap with each other. Since the wheels move along the guide rails 31 at the storage position, an overlapping state of the carts 1 is determined according to shapes of the frame 14 and the storing basket 12. If an interval between the front and rear carts 1 stored at the storage position in an overlapping manner is a predetermined distance, an interval at which the power reception devices 23 of the carts 1 are arranged is also the predetermined distance. Specifically, the carts 1 move along the guide rails 31 at the storage position to be stored in a state in which the front and rear carts 1 overlap with each other. Therefore, at the storage position, the power reception devices 23 of the carts 1 are arranged at a predetermined interval corresponding to the interval between the front and rear carts 1 in the stored state.

The power transmission device 32 outputs the electric power that the power reception device 23 can receive in the non-contact manner. The power transmission device 32 has an antenna for power transmission and a circuit for power transmission. The power transmission device 32 is arranged to face the side surface of the cart main body 11 in such a manner that a power transmission surface (i.e., a surface facing the power reception antenna of the power reception device) of the antenna for power transmission (i.e., power transmission antenna) for outputting the electric power is substantially perpendicular to the floor. The configuration of a control system of the power transmission device 32 is described in detail below.

The power transmission device 32 is arranged at a position facing the power reception device 23 of each cart 1 stored at the storage position. In the configuration shown in Fig. 2, the power reception devices 23 of each cart 1 stored at the storage position are arranged along the guide rails 31 at predetermined intervals. For this reason, the power transmission devices 32 are arranged at predetermined intervals along the guide rails 31 to face the power reception devices 23 of the stored carts 1.

Next, a configuration of a control system of the power supply system is described.

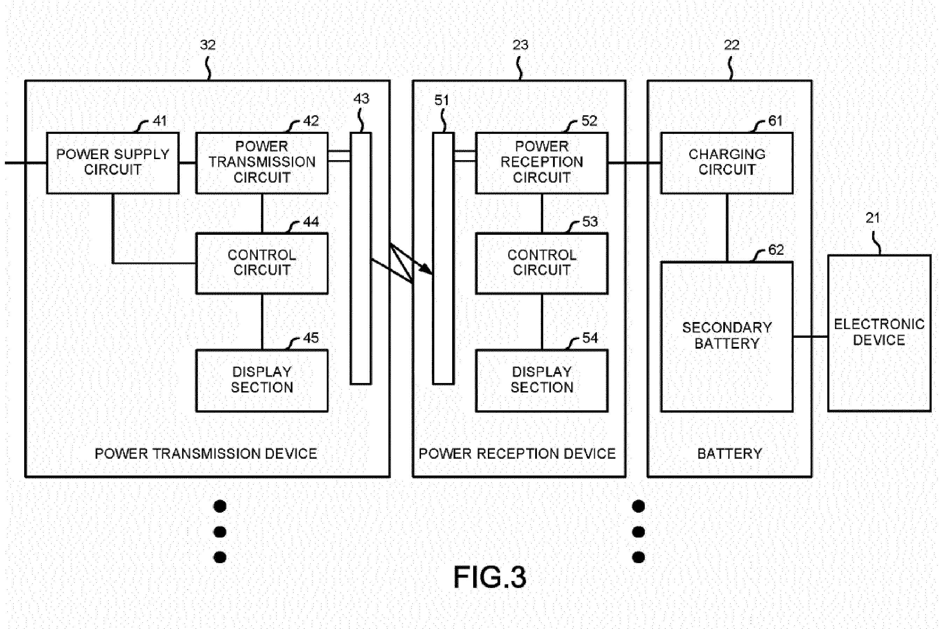

The power supply system includes the power reception system including the power reception device 23 attached to each cart 1 and the power transmission system including the power transmission device 32 mounted at a position corresponding to the position of the cart 1 at the storage position. Specifically, the power supply system is a system in which the power transmission device 32 mounted at a position corresponding to the position of the cart 1 at the storage position transmits the electric power to the power reception device 23 attached to each cart in the non-contact manner. In the power supply system, the power transmission device 32 of the power transmission system transmits the electric power without being physically and electrically connected to the power reception device 23 of the power reception system (i.e., in a non-contact state). Fig. 3 is a block diagram illustrating a configuration of the control system of the power supply system.

The power supply system is used to transmit the electric power in the non-contact manner, and includes a system on the power transmission side (i.e., the power transmission system) and a system on the power reception side (i.e., the power reception system). The power transmission system transmits the electric power in the non-contact manner to the power reception device 23 loaded in each cart 1 stored at the storage position. The power reception system charges the battery 22 with the electric power received by the power reception device 23 in the non-contact manner.

The power transmission system has a plurality of power transmission devices 32 arranged along the guide rails 31 at the storage position. Each power transmission device 32 is supplied with direct current (DC) power via a DC power supply such as an alternating current (AC) adapter connected to a commercial power supply. The power transmission device 32 operates either in a power transmission state in which the electric power is supplied to the power reception device 23 or in a standby state in which no electric power is supplied to the power reception device 23.

In the configuration shown in Fig. 3, each power transmission device 32 constituting the power transmission system includes a power supply circuit 41, a power transmission circuit 42, a power transmission antenna 43, a control circuit 44, and a display section 45.

The power supply circuit 41 converts a DC power supply voltage from an external device to a voltage suitable for an operation by each circuit. The power supply circuit 41 generates electric power for enabling the power transmission circuit 42 to perform the power transmission, and supplies the generated electric power to the power transmission circuit 42. The power supply circuit 41 generates electric power for operating the control circuit 44, and supplies the generated electric power to the control circuit 44. The power transmission circuit 42 generates transmission power to be transmitted from the power transmission antenna 43. The power transmission circuit 42 supplies the generated transmission power to the power transmission antenna 43. For example, the power transmission circuit 42 generates AC power as the transmission power by switching the DC power supplied from the power supply circuit 41 under the control of the control circuit 44.

The power transmission antenna 43 outputs the electric power that can be received by the power reception device 23 according to the transmission power supplied from the power transmission circuit 42. The power transmission surface of the power transmission antenna 43 for transmitting the electric power is formed along a plane. The power transmission surface of the power transmission antenna 43 is arranged to face the power reception surface of a power reception antenna 51 of the power reception device 23 in a state of being substantially perpendicular to the floor.

For example, the power transmission antenna 43 is a resonant circuit (i.e., a power transmission resonant circuit) constituted by connecting a coil for power transmission (i.e., a power transmission coil) in series or in parallel with a capacitor for resonance. When the AC power is supplied from the power transmission circuit 42, the power transmission antenna 43 serving as the power transmission resonant circuit generates a magnetic field corresponding to the supplied AC power. The power transmission coil of the power transmission antenna 43 may have a winding structure in which an insulated wire is wound, or may be constituted by forming a coil pattern on a printed circuit board.

The display section 45 is an indicator for indicating a state of the power transmission device 32. The display section 45 changes a display thereon under the control of the control circuit 44. For example, the display section 45 changes a display color according to an operating state of the power transmission device 32. The display section 45 may display a message indicating an operating state.

The control circuit 44 controls operations of the power transmission circuit 42 and the display section 45. The control circuit 44 includes a processor and a memory. The processor executes an arithmetic processing. The processor performs various processing based on, for example, programs stored in the memory and data used in the programs. The memory stores programs and the data used in the programs. The control circuit 44 may be constituted by a microcomputer and/or an oscillation circuit.

For example, the control circuit 44 changes a display on the display section 45 according to the state of the power transmission device 32. The control circuit 44 controls a frequency of the AC power output from the power transmission circuit 42, and controls an ON/OFF of the operation performed by the power transmission circuit 42. For example, the control circuit 44 controls the power transmission circuit 42 to switch an operating state between a state in which a magnetic field is generated in the power transmission coil of the power transmission antenna 43 (i.e., the power transmission state) and a state in which no magnetic field is generated in the power transmission coil (i.e., the standby state). The control circuit 44 may perform control to intermittently generate the magnetic field in the power transmission coil of the power transmission antenna 43 to change the transmission power.

The power transmission device 32 may be provided with a wireless communication circuit for performing wireless communication. For example, the wireless communication circuit performs the wireless communication at a frequency different from the frequency for power transmission. The control circuit 44 may control each section by wirelessly communicating with the power reception device 23 through the wireless communication circuit. The wireless communication circuit may use load modulation to perform the wireless communication at a frequency that is the same as the frequency for power transmission.

Next, the power reception system is described.

The power reception system includes the power reception device 23 and the battery 22 loaded in each cart 1. The power reception device 23 includes a power reception antenna 51, a power reception circuit 52, a control circuit 53, and a display section 54. The battery 22 has a charging circuit 61 and a secondary battery 62. However, the power reception device 23 may include an output terminal for supplying the electric power to the electronic device 21. In this case, the battery 22 may be charged with the electric power supplied via the electronic device 21.

The power reception antenna 51 receives the transmission power from the power transmission antenna 43, and then supplies the received electric power to the power reception circuit 52. In the power reception antenna 51, a power reception surface for receiving the electric power is formed along a plane. The power reception surface of the power reception antenna 51 is attached to the side surface of the cart main body 11 in a state of being substantially perpendicular to the floor.

For example, the power reception antenna 51 is a resonant circuit (i.e., a power reception resonant circuit) constituted by connecting a coil for power reception (i.e., a power reception coil) in series or in parallel with a capacitor. If the power reception antenna 51 serving as the power reception resonant circuit approaches the power transmission antenna 43 of the power transmission device 32, the power reception coil is electromagnetically coupled to the power transmission coil of the power transmission antenna 43. In the power reception coil of the power reception antenna 51, an induced current is generated by the magnetic field output from the power transmission coil of the power transmission antenna 43 of the power transmission device 32. The power reception coil may have a winding structure in which an insulated wire is wound, or may be constituted by forming a coil pattern on a printed circuit board.

The power reception antenna 51 serving as the power reception resonant circuit supplies the received AC power to the power reception circuit 52. In other words, the power reception antenna 51 functions as an AC power supply while receiving the AC power from the power transmission device 32. In a case in which a magnetic field resonance system is used for power transmission, a self-resonance frequency of the power reception resonant circuit functioning as the power reception antenna 51 is substantially the same as the frequency at which the power transmission device 32 performs the power transmission. In this way, the power transmission efficiency at the time the power reception coil of the power reception antenna 51 and the power transmission coil of the power transmission antenna 43 are electromagnetically coupled can be enhanced.

The power reception circuit 52 converts reception power supplied from the power reception antenna 51 to the electric power that can be supplied to the battery 22 or the electronic device 21. For example, the power reception circuit 52 rectifies the reception power supplied from the power reception antenna 51 to convert it to a DC power. Such a power reception circuit 52 is implemented, for example, by a circuit including a rectifying bridge formed by a plurality of diodes. In this case, a pair of input terminals of the rectifying bridge is connected to the power reception resonant circuit functioning as the power reception antenna 51. The power reception circuit 52 outputs the DC power from the pair of output terminals by performing full-wave rectification on the reception power supplied from the power reception antenna 51.

The display section 54 displays various kinds of information. For example, the display section 54 is an indicator that indicates a state of the power reception device 23. The display section 54 changes a display thereon under the control of the control circuit 53. For example, the display section 54 changes a display color according to an operating state of the power reception device 23. The display section 54 may display a message indicating the operating state.

The control circuit 53 controls operations performed by the power reception circuit 52 and the display section 54. The control circuit 53 includes a processor and a memory. The processor executes an arithmetic processing. The processor performs various processing based on, for example, programs stored in the memory and data used in the programs. The memory stores the programs and the data used in the programs. The control circuit 53 may be constituted by a microcomputer and/or an oscillation circuit. For example, the control circuit 53 switches the display of the display section 54 according to the state of the power reception device 23.

The power reception device 23 may be provided with a wireless communication circuit for performing wireless communication with the corresponding power transmission device 32. For example, the wireless communication circuit performs the wireless communication at a frequency different from the frequency for power transmission. The control circuit 53 may control each section by wirelessly communicating with the power transmission device 32 through the wireless communication circuit. The wireless communication circuit may use load modulation to perform the wireless communication at a frequency that is the same as the frequency for power transmission.

The charging circuit 61 supplies the electric power supplied from the power reception circuit 52 of the power reception device 23 to the secondary battery 62 as power for charging (charging power). For example, the charging circuit 61 converts the electric power supplied from the power reception circuit 52 to the DC power (charging power) used to charge the secondary battery 62. Specifically, the charging circuit 61 converts the electric power from the power reception circuit 52 to a charging power having a predetermined current value and voltage value for charging the secondary battery 62, and then supplies the converted charging power to the secondary battery 62.

The secondary battery 62 is charged with the charging power supplied from the charging circuit 61. The secondary battery 62 is connected to the electronic device 21 and supplies the electric power to the electronic device 21.

Next, a positional relationship between the power reception device 23 attached to each cart 1 and the power transmission device 32 for transmitting the electric power to the power reception device 23 is described.

Since the power transmission between the power transmission device 32 and the power reception device 23 is performed in the non-contact manner, alignment between the power transmission antenna and the power reception antenna is required. In non-contact power transmission, if the power transmission antenna and the power reception antenna are aligned accurately, the power transmission efficiency is enhanced to some extent. For example, the power transmission antenna (the power transmission coil) transmits the electric power in the non-contact manner to the power reception antenna (the power reception coil) using magnetic field coupling such as electromagnetic induction or magnetic field resonance. In the non-contact power transmission using such magnetic field coupling, the electric power cannot be transmitted unless the position of the power transmission coil matches the position of the power reception coil.

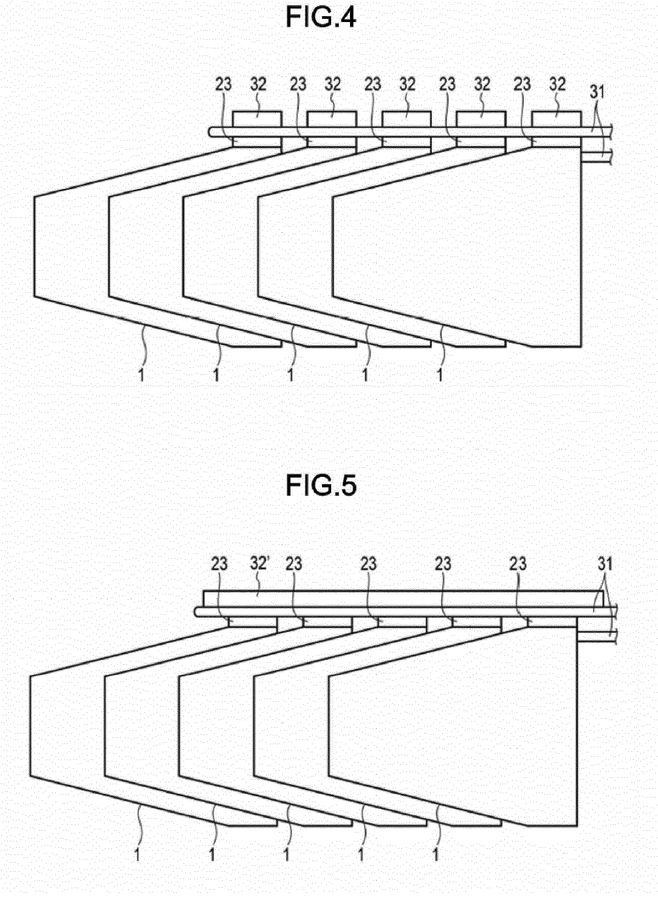

Fig. 4 is a top view obtained by overlooking the carts 1 stored at the storage position and the power transmission devices 32 facing the power reception devices 23 in the corresponding carts 1.

In the power supply system according to the embodiment, the power transmission device 32 transmits the electric power to the power reception device 23 attached to the cart 1 stored at the storage position. Therefore, the power transmission device 32 is arranged at a position corresponding to the position of the cart 1 stored at the storage position (i.e., the position of the power reception device 23 attached to the side surface of the cart 1). In Fig. 4, the positions of the power reception devices 23 attached to the side surfaces of the carts 1 stored at the storage position and the plurality of the power transmission devices 32 arranged at the positions facing the power reception devices 23 of the carts 1 are shown.

The cart 1 is stored at the storage position in such a manner that it overlaps with the previously stored cart. If the position of the cart 1 stored first at the storage position is fixed, the power reception devices 23 are arranged at an interval corresponding to the interval between the front and rear carts 1 stored at the storage position. Correspondingly, a plurality of the power transmission devices 32 is arranged on the side of the carts 1 at an interval corresponding to the interval between the front and rear carts 1 stored at the storage position. In this way, the plurality of power transmission devices 32 can transmit the electric power towards the side surfaces of the carts 1 correspondingly at positions facing the power reception devices 23 of the plurality of carts 1 stored at the storage position.

In the configuration shown in Fig. 2, the guide rails 31 are arranged to restrict the moving direction of each cart 1 at the storage position. In this case, the cart 1 moves along the guide rails 31, and is stored by overlapping with the cart previously stored. In the configuration in which the guide rails 31 are arranged at the storage position, the power transmission devices 32 need to be arranged at predetermined intervals along the guide rails 31 on the side of each cart.

The power transmission system may be any system as long as it can transmit the electric power to each of the power reception devices 23 attached to the plurality of carts 1 stored at the storage position.

Fig. 5 is a diagram illustrating a modification of a power transmission device 32' in the power supply system.

In the modification shown in Fig. 5, one power transmission device 32' is arranged to transmit the electric power to a region covering the positions facing all the power reception devices 23 of the plurality of carts stored at the storage position. At the storage position, the plurality of carts 1 is stored in tandem along the guide rails 31. For this reason, the power transmission device 32' is provided with a strip-shaped power transmission surface substantially perpendicular to the floor to be capable of transmitting the electric power to each of the power reception devices 23 attached to the plurality of carts that can be stored at the storage position. In this case, as shown in Fig. 5, the power transmission device 32' needs to be arranged along the guide rails 31 in a state in which the strip-shaped power transmission surface thereof faces the side surface of each cart 1.

As described above, according to the first embodiment, in each cart loaded with the battery, the power reception antenna is attached to the side surface of each cart main body in such a manner that the power reception surface is substantially perpendicular to the floor. The power transmission device is arranged at a position opposite to the power reception antenna attached to each cart stored at the storage position in such a manner that the power transmission surface of the power transmission antenna is substantially perpendicular to the floor. According to such a configuration, no foreign object is placed on the power transmission surface of the power transmission antenna, and the possibility of the foreign object being inserted between the power reception antenna and the power transmission antenna is reduced. As a result, the power supply system capable of safely performing the non-contact power transmission without generating heat and the like due to the foreign object can be achieved.

### (Second Embodiment)

Next, a second embodiment is described.

In the second embodiment, as shown in Fig. 4, as a premise, a plurality of power transmission devices respectively corresponding to the power reception devices of a plurality of carts stored at the storage position is arranged. In a case in which the plurality of power transmission devices is arranged in accordance with storage positions of the carts, the alignment between the power reception antenna and the power transmission antenna becomes accurate by stopping the cart at a predetermined position. The guide rails 31 shown in Fig. 2 restrict the moving direction of the cart 1 to define a distance between the power transmission surface of the power transmission antenna and the power reception surface of the opposite power reception antenna. If all the carts have the same shape, it is expected that the interval between the front and rear carts is constant for the plurality of carts reliably stored in an overlapping manner. However, in the actual operation, all the carts are difficult to reliably store in the overlapping manner merely by rails for restricting the moving direction.

For this reason, in the second embodiment, components for stopping the wheels moving along the guide rails 31 at predetermined stop positions are provided. If all the carts are reliably stopped at the predetermined stop positions, alignment between the power reception antenna and the power transmission antenna can be achieved.

The power supply system according to the second embodiment has the same configuration as that of the above-described first embodiment except that the power supply system according to the second embodiment has a component for stopping the wheels moving along the guide rails 31. Therefore, in the second embodiment, the detailed description relating to the same configuration as that of the first embodiment is omitted.

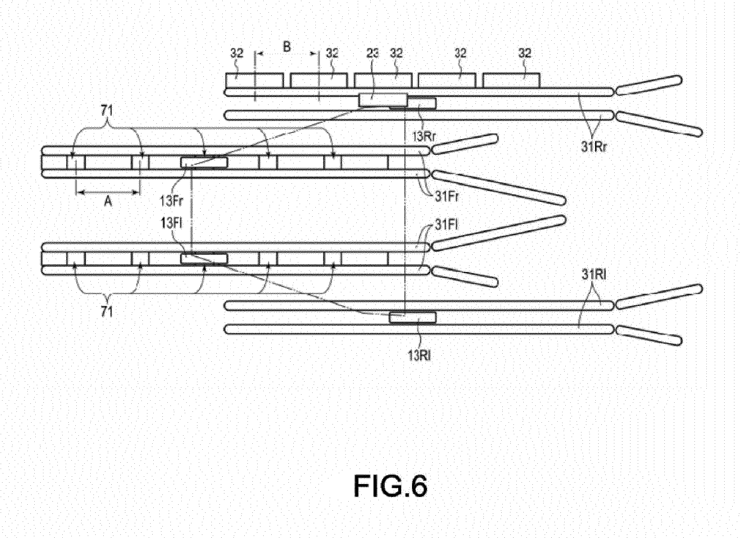

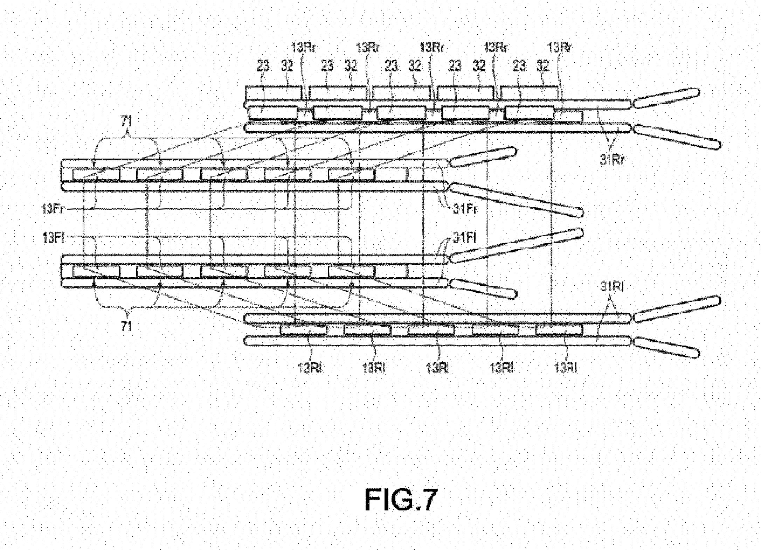

Fig. 6 and Fig. 7 are top views schematically illustrating a configuration of the power supply system according to the second embodiment. Fig. 6 is a diagram illustrating an example in which one cart 1 is stored at the storage position. Fig. 7 is a diagram illustrating an example in which five carts 1 are stored at the storage position.

In the examples shown in Fig. 6 and Fig. 7, the guide rails 31Fr and 31Fl each are provided with a plurality of recesses 71 at predetermined intervals. The wheels 13Fr and 13Flmoving along guide rails 31Fr and 31Fl fall into the recesses 71 so as to be stopped easily. Each recess 71 is arranged at a position corresponding to the position of each wheel of the cart 1 in a case in which the cart 1 is stopped at a predetermined stop position. In the example shown in Fig. 6 and Fig. 7, the recesses 71 are arranged in the guide rails 31Fr and 31F1 at positions where the front wheels 13Fr and 13F1 of each cart 1 are to be stopped.

A distance A between adjacent recesses 71 in the guide rail 31 corresponds with a distance B between the power transmission antennas of the adjacent power transmission devices. However, the distance A indicates an interval between central positions of the adjacent recesses 71. The distance B indicates an interval between central positions of the adjacent power transmission devices 32 (the power transmission antennas 43).

The recess 71 may be arranged to correspond to any one of the plurality of wheels of the cart 1. For example, the recess 71 may be arranged in any one of the guide rails 31Rr, 31Rl, 31Fr and 31Fl. In other words, the recess 71 is not limited to being arranged in the guide rails 31Fr and 31Fl, and may be arranged in the guide rails 31Rr and 31Rl along which the rear wheels of the cart 1 move. The recesses 71 may be arranged at positions corresponding to both the front wheels and the rear wheels of the cart 1.

Next, the configuration of the recess 71 for stopping the wheel of the cart 1 is described.

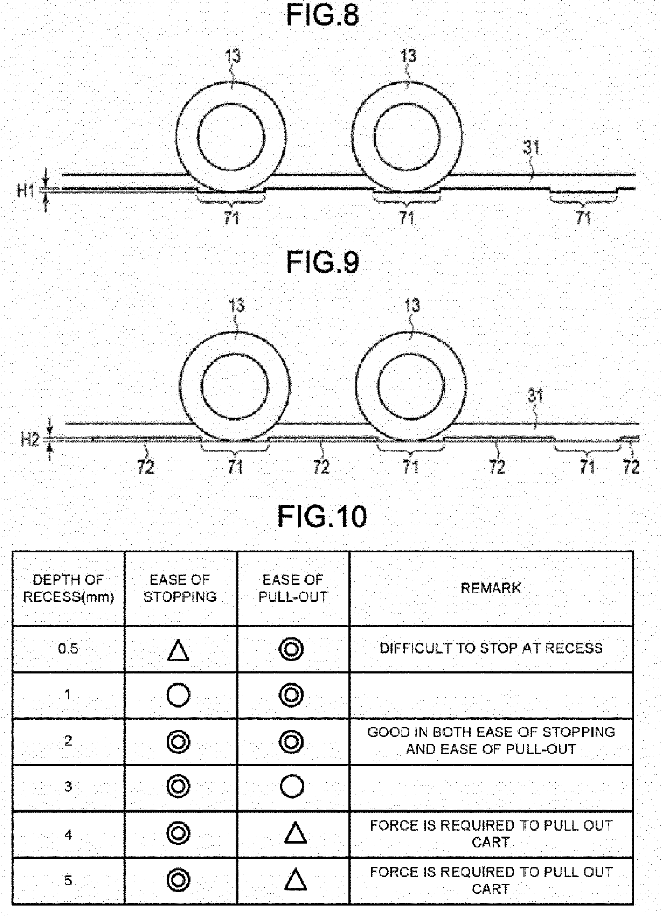

Fig. 8 is a diagram illustrating a first configuration of the recess 71. Fig. 9 is a diagram illustrating a second configuration of the recess 71.

In the first configuration shown in Fig. 8, the recess 71 is formed by digging the floor on which the wheels of the cart 1 move. For example, the recess 71 having the first configuration is formed by digging the floor by a step (difference in height between the recess and the floor) HI at a stop position of the wheel in a moving path of the wheel along the guide rail 31.

In the second configuration shown in Fig. 9, the recess 71 is formed by mounting a member 72 having a thickness corresponding to a step (difference in height between the recess and the floor) H2. Specifically, the recess 71 having the second configuration is formed by mounting the member 72 to a portion other than the stop position of the wheel in the moving path of the wheel along the guide rail 31. Therefore, in the recess 71 having the second configuration, the step (difference in height between the recess and the front and rear portions thereof) H2 becomes a thickness H2 of the member 72. The member 72 may be made of, for example, thin resin or metal.

The cart is pulled out from the storage position by the user at the time of use, in addition to being stored at the storage position after use. Therefore, the recess 71 necessarily has a configuration by which the wheel is easily stopped and the wheel is easily pulled out at the time of use. Generally, it is considered that as the step becomes large, the wheel can be stopped more easily; and contrarily, as the step becomes small, the wheel can be pulled out more easily. It is considered that the step of the recess 71 is set according to an average subjective evaluation of the person if an unspecified person moves the cart. Fig. 10 is a diagram illustrating experimental results of subjective evaluation on the movement of the cart relative to the depth (step) of the recess 71.

The experimental result shown in Fig. 10 shows the subjective evaluation in a case in which a test person stops the cart with wheels each having a diameter of 100 millimeters (mm) at the recesses and pulls the wheels out of the recesses. According to the experimental results shown in Fig. 10, the ease of stopping at the recess is good when the depth of the recess is 2 mm or larger, and it is considered that the depth of about 1 mm is also within an allowable range. The ease of pulling out of the recess is good at 2 mm or lower, and it is considered that the depth of about 3 mm is also within an allowable range.

According to the experimental results shown in Fig. 10, it is considered that the depth (step H1 or H2) of the recess 71 is required to be set to about 1 to 3 mm. It is considered that the appropriate depth of the recess 71 also changes depending on the size of the wheel. Therefore, if the experimental results shown in Fig. 10 are shown with a ratio to the diameter of the wheel, it is considered that the depth (step HI or H2) of the recess 71 is required to be set to about 1% to 3%. Therefore, in the second embodiment, the depth of the recess 71 for stopping each cart 1 at the storage position is set to about 1 to 3% with respect to the diameter of the wheel of the cart 1.

As described above, the power supply system according to the second embodiment is provided with the recess corresponding to the wheel of the cart to stop the cart at a predetermined stop position. The recesses are arranged side by side at a predetermined pitch in the moving direction of the wheels of the cart 1 at the storage position. A plurality of the power transmission devices are arranged side by side at the predetermined pitch on the side of each cart stored at the storage position in such a manner that an interval between the power transmission devices is the same as that of the recesses. According to the second embodiment, by arranging the recesses for stopping the carts and the power transmission devices side by side at the same interval, the power reception device of each cart and the power transmission device can reliably face each other.

In the power supply system according to the second embodiment, the depth of the recess for stopping the wheel of the cart is set to about 1% to 3% with respect to the diameter of the wheel of the cart. Thereby, the cart can be easily stopped at the recess and can be easily pulled out of the recess. As a result, it is possible to provide the power supply system capable of reliably and safely transmitting the electric power in the non-contact manner to the power reception device loaded in the cart without impairing the convenience of the user.

## Claims

1. A power supply system comprising a power transmission device (32) for transmitting electric power to a cart (1), the power transmission device (32) comprising:
a first power transmission antenna (43) configured to be disposed along a side of the cart (1) so as to face a power reception antenna (51) arranged in a side surface of the cart (1), the first power transmission antenna (43) configured to transmit electric power towards the side surface of the cart (1); and
a power transmission circuit (42) configured to cause the first power transmission antenna (43) to transmit the electric power to the first power reception antenna (43),
wherein the power supply system comprises a pair of guide rails (31) configured to receive a wheel (13) of the cart (1), and
the first power transmission antenna (43) is disposed along one of the guide rails (31)
**characterized in that** each of the guide rails (31) comprises a plurality of recesses (71), each of the recesses (71) being configured to receive the wheel (13) such that the cart (1) is stopped at a position relative to the guide rails (31).

2. The power supply system according to claim 1, wherein each of the recesses is formed by digging a floor on which the wheels of the cart move or by mounting a member (72) having a thickness corresponding to a difference in height between the recess and the floor.

3. The power supply system according to claim 2, wherein each of the plurality of recesses is defined by a depth, the depth being 1% to 3%, inclusive, of a diameter of the wheel.

4. The power supply system according to any one of claims 1 to 3, further comprising a second power transmission antenna disposed along the side of the cart;
wherein the power transmission circuit is configured to determine a first distance between the power reception antenna and the first power transmission antenna, determine a second distance between the power reception antenna and the second power transmission antenna, and cause the first power transmission antenna to transmit the electric power to the power reception antenna in response to determining that the first distance is less than the second distance.

5. The power supply system according to any one of claims 1 to 4, wherein the first power transmission antenna is disposed above a ground surface along which the cart is resting.

6. The power supply system according to any one of claims 1 to 5, for transmitting electric power to at least one of a plurality of carts, the system comprising:
a plurality of the power transmission devices arranged side by side at an interval coincident with that of the plurality of carts.

7. The power supply system according to claim 6, wherein a distance between adjacent recesses in the guide rail corresponds with a distance between the power transmission antennas of the adjacent power transmission devices.

8. The power supply system according to any one of claims 1 to 7, further comprising:
a power reception device (23) for the cart, the power reception device comprising:
a battery (22);
a power reception antenna (51) configured to receive electric power; and
a power reception circuit (52) configured to supply the electric power received by the power reception antenna to the battery.

## Patentansprüche

1. Leistungsversorgungssystem, umfassend ein Leistungsübertragungsgerät (32) zum Übertragen von elektrischer Leistung an einen Einkaufswagen (1), wobei das Leistungsübertragungsgerät (32) umfasst:
eine erste Leistungsübertragungsantenne (43), die ausgelegt ist, um entlang einer Seite des Einkaufswagens (1) so angeordnet zu werden, dass sie einer Leistungsempfangsantenne (51) gegenüberliegt, die in einer Seitenfläche des Einkaufswagens (1) angeordnet ist, wobei die erste Leistungsübertragungsantenne (43) zum Übertragen von elektrischer Leistung zur Seitenfläche des Einkaufswagens (1) ausgelegt ist; und
eine Leistungsübertragungsschaltung (42), die ausgelegt ist, um die erste Leistungsübertragungsantenne (43) zum Übertragen der elektrischen Leistung an die erste Leistungsempfangsantenne (43) zu veranlassen,
wobei das Leistungsversorgungssystem ein Paar von Führungsschienen (31) umfasst, das zum Aufnehmen eines Rades (13) des Einkaufswagens (1) ausgelegt ist, und
die erste Leistungsübertragungsantenne (43) entlang einer der Führungsschienen (31) angeordnet ist,
**dadurch gekennzeichnet, dass** jede der Führungsschienen (31) eine Mehrzahl von Ausnehmungen (71) umfasst, jede der Ausnehmungen (71) zum Aufnehmen des Rades (13) ausgelegt ist, derart dass der Einkaufswagen (1) in einer Position in Bezug auf die Führungsschiene (31) gestoppt wird.

2. Leistungsversorgungssystem nach Anspruch 1, wobei jede der Ausnehmungen durch Aufgraben eines Bodens, auf dem die Räder des Einkaufswagens sich bewegen, oder durch Montieren eines Elements (72) mit einer Dicke gebildet ist, die einem Höhenunterschied zwischen der Ausnehmung und dem Boden entspricht.

3. Leistungsversorgungssystem nach Anspruch 2, wobei jede der Mehrzahl von Ausnehmungen durch eine Tiefe definiert ist, wobei die Tiefe 1 % bis einschließlich 3 % eines Durchmessers des Rades ist.

4. Leistungsversorgungssystem nach einem der Ansprüche 1 bis 3, ferner umfassend eine zweite Leistungsübertragungsantenne, die entlang der Seite des Einkaufswagens angeordnet ist;
wobei die Leistungsübertragungsschaltung zum Bestimmen einer ersten Distanz zwischen der Leistungsempfangsantenne und der ersten Leistungsübertragungsantenne, Bestimmen einer zweiten Distanz zwischen der Leistungsempfangsantenne und der zweiten Leistungsübertragungsantenne und in Reaktion auf das Bestimmen, dass die erste Distanz kleiner als die zweite Distanz ist, Veranlassen der ersten Leistungsübertragungsantenne zum Übertragen der elektrischen Leistung an die Leistungsempfangsantenne ausgelegt ist.

5. Leistungsversorgungssystem nach einem der Ansprüche 1 bis 4, wobei die erste Leistungsübertragungsantenne über einer Grundfläche angeordnet ist, entlang welcher der Einkaufswagen steht.

6. Leistungsversorgungssystem nach einem der Ansprüche 1 bis 5 zum Übertragen von elektrischer Leistung an mindestens einen einer Mehrzahl von Einkaufswägen, wobei das System umfasst:
eine Mehrzahl der Leistungsübertragungsgeräte, die in einem Abstand, der mit dem der Mehrzahl von Einkaufswagen übereinstimmt, nebeneinander angeordnet ist.

7. Leistungsversorgungssystem nach Anspruch 6, wobei eine Distanz zwischen benachbarten Ausnehmungen in der Führungsschiene einer Distanz zwischen den Leistungsübertragungsantennen der benachbarten Leistungsübertragungsgeräte entspricht.

8. Leistungsversorgungssystem nach einem der Ansprüche 1 bis 7, ferner umfassend:
ein Leistungsempfangsgerät (23) für den Einkaufswagen, wobei das Leistungsempfangsgerät umfasst:
eine Batterie (22);
eine Leistungsempfangsantenne (51), die zum Empfangen von elektrischer Leistung ausgelegt ist; und
eine Leistungsempfangsschaltung (52), die zum Zuführen der durch die Leistungsempfangsantenne empfangenen Leistung zur Batterie ausgelegt ist.

## Revendications

1. Système d'alimentation comprenant un dispositif de transmission de puissance (32) destiné à transmettre une énergie électrique à un chariot (1), le dispositif de transmission de puissance (32) comprenant :
une première antenne de transmission de puissance (43) configurée pour être disposée le long d'un côté du chariot (1) de façon à faire face à une antenne de réception de puissance (51) prévue sur une surface latérale du chariot (1), la première antenne de transmission de puissance (43) étant configurée pour transmettre une énergie électrique vers la surface latérale du chariot (1) ; et
un circuit de transmission de puissance (42) configuré pour permettre à la première antenne de transmission de puissance (43) de transmettre l'énergie électrique à la première antenne de réception de puissance (43),
dans lequel le système d'alimentation comprend une paire de rails de guidage (31) configurés pour recevoir une roue (13) du chariot (1), et
la première antenne de transmission de puissance (43) est disposée le long de l'un des rails de guidage (31),
**caractérisé en ce que** chacun des rails de guidage (31) comprend une pluralité de renfoncements (71), chacun des renfoncements (71) étant configuré pour recevoir la roue (13) de sorte que le chariot (1) soit arrêté à un emplacement par rapport aux rails de guidage (31).

2. Système d'alimentation selon la revendication 1, dans lequel chacun des renfoncements est formé en creusant un sol sur lequel les roues du chariot se déplacent ou en montant un élément (72) qui possède une épaisseur qui correspond à une différence de hauteur entre le renfoncement et le sol.

3. Système d'alimentation selon la revendication 2, dans lequel chacun de la pluralité de renfoncements est défini par une profondeur, la profondeur étant égale à 1% à 3%, inclus, d'un diamètre de la roue.

4. Système d'alimentation selon l'une quelconque des revendications 1 à 3, comprenant en outre une seconde antenne de transmission de puissance disposée le long du côté du chariot ;
dans lequel le circuit de transmission de puissance est configuré pour déterminer une première distance entre l'antenne de réception de puissance et la première antenne de transmission de puissance, pour déterminer une seconde distance entre l'antenne de réception de puissance et la seconde antenne de transmission de puissance, et pour permettre à la première antenne de transmission de puissance de transmettre l'énergie électrique à l'antenne de réception de puissance en réponse à la détermination du fait que la première distance soit inférieure à la seconde distance.

5. Système d'alimentation selon l'une quelconque des revendications 1 à 4, dans lequel la première antenne de transmission de puissance est disposée au-dessus d'une surface du sol le long de laquelle le chariot repose.

6. Système d'alimentation selon l'une quelconque des revendications 1 à 5, destiné à transmettre une énergie électrique à au moins l'un d'une pluralité de chariots, le système comprenant :
une pluralité de dispositifs de transmission de puissance disposés côte à côte à un intervalle coïncident avec celui de la pluralité de chariots.

7. Système d'alimentation selon la revendication 6, dans lequel une distance entre des renfoncements adjacents dans le rail de guidage correspond à une distance entre les antennes de transmission de puissance des dispositifs de transmission de puissance adjacents.

8. Système d'alimentation selon l'une quelconque des revendications 1 à 7, comprenant en outre :
un dispositif de réception de puissance (23) pour le chariot, le dispositif de réception de puissance comprenant :
une batterie (22) ;
une antenne de réception de puissance (51) configurée pour recevoir une énergie électrique ; et
un circuit de réception de puissance (52) configuré pour fournir l'énergie électrique reçue par l'antenne de réception de puissance à la batterie.
